# EUROPEAN PATENT APPLICATION

(11) **EP 4 822 339 A1**
(43) Date of publication of application: **14.10.2026**
(21) Application number: 24899151.5
(22) Date of filing: 28.05.2024
(51) Int. Cl.: G01N 21/88, G06T 7/00

(54) **TAB INSPECTION SYSTEM AND METHOD**

(30) Priority: 07.12.2023 CN 202311676379
(71) Applicant: Contemporary Amperex Technology Co., Limited, Ningde, Fujian 352100 (CN); Contemporary Amperex Runzhi Software Technology Limited, Ningde, Fujian 352100 (CN)
(72) Inventor: LI, Hongyuan, Ningde, Fujian 352100 (CN); JIANG, Ping, Ningde, Fujian 352100 (CN); QI, Lei, Ningde, Fujian 352100 (CN); LI, Zihao, Ningde, Fujian 352100 (CN)
(74) Representative: Ziebig Hengelhaupt Intellectual Property Attorneys Patentanwaltskanzlei PartGmbB
(86) International application number: PCT/CN2024/095816
(87) International publication number: WO 2025/118499

(57) **Abstract**

A tab (70) inspection system and method, which are used for inspecting a tab (70) in a battery cell obtained by means of cell integration processing. The battery cell comprises a battery cell body (50), the tab (70) and a cover plate (60), wherein the tab (70) is arranged between the cover plate (60) and the battery cell body (50). The tab inspection system comprises: a distance expansion apparatus (10), a light source (20), a photographic apparatus (30) and an upper computer (40), wherein the distance expansion apparatus (10) is used for expanding the distance between the battery cell body (50) and the cover plate (60), so as to expose a side face of the tab (70); the light source (20) is used for lighting the side face of the tab (70); the photographic apparatus (30) is used for acquiring a first scanning image which contains the side face of the tab (70); and the upper computer (40) is used for determining, on the basis of the first scanning image, whether the side face of the tab (70) is fractured. After a battery cell has been subjected to cell integration processing, the distance expansion apparatus (10) may be used to expand the distance between the battery cell body (50) and the cover plate (60), so as to expose the side face of the tab (70), such that an inspection for the tab (70) is realized, thereby improving the safety of the battery cell.

## Description

### RELATED APPLICATION

The present application claims priority to Chinese Patent Application No. 202311676379.3 filed on December 7, 2023, the contents of which are incorporated by reference in their entirety in the present application.

### TECHNICAL FIELD

The present application relates to the technical field of visual inspection, and specifically relates to a tab inspection system and method.

### BACKGROUND

Tabs are metal conductors that lead the positive and negative electrodes out of a battery cell. During the battery assembly process, the tabs are subjected to processes such as cutting, shaping, laser welder, bending, and bare cell combining. These processes may cause the tabs to fracture, which will lead to product scrapping. If such defective products reach the customer, it will cause serious quality incidents.

Current technology typically involves using a photographic apparatus to inspect the tabs before the battery cells are combined. However, during the cell combining process, side faces of the tabs are prone to fracture. Current technology may only inspect the shape of the tabs before cell combining, but may not inspect whether the tabs are fractured after cell combining, which may lead to missed inspection and battery cell safety issues.

### SUMMARY OF THE INVENTION

In view of the above problems, the present application provides a tab inspection system and method, aiming to solve the problem that the current technology may not inspect whether the tab is fractured after cell combining.

In a first aspect, the present application provides a tab inspection system, the tab inspection system is configured to inspect tabs in a battery cell obtained after cell combining processing, the battery cell includes a battery cell body, tabs and a cover plate, the tabs are disposed between the cover plate and the battery cell body, and the tab inspection system includes: a distance expansion apparatus, a light source, a photographic apparatus and an upper computer;
the distance expansion apparatus is configured to expand the distance between the battery cell body and the cover plate, so as to expose a side face of a tab;
the light source is configured to light the side face of the tab;
the photographic apparatus is configured to acquire a first scanned image containing the side face of the tab; and
the upper computer is configured to determine whether the side face of the tab is fractured based on the first scanned image.

Because the tab is blocked between the cover plate and the battery cell body after the battery cell undergoes the cell combining processing, it is difficult to inspect whether the tab is fractured. Based on the embodiments of the present application, after the battery cell undergoes cell combining processing, the distance between the battery cell body and the cover plate may be expanded by using the distance expansion apparatus, thereby exposing the side face of the tab and enabling inspection of the tab, which in turn improves the safety of the battery cell.

In some embodiments, the battery cell includes multiple tabs, a first tab of the multiple tabs corresponds to one light source and two photographic apparatuses, and the two photographic apparatuses include a first photographic apparatus and a second photographic apparatus,
wherein an angle between the photographing direction of the first photographic apparatus and a first direction is a first angle, the scanned image obtained based on the first photographic apparatus includes a first edge line of the side of the first tab, the first edge line is close to the battery cell body, and the first direction is perpendicular to the side of the first tab; and
an angle between the photographing direction of the second photographic apparatus and the first direction is a second angle, the scanned image obtained based on the second photographic apparatus includes a second edge line of the side of the first tab, and the second edge line is close to the cover plate.

By photographing the side face of the tab along different directions through the two photographic apparatuses, omnidirectional photographing of the side face of the tab may be realized, improving the accuracy of tab inspection.

In some embodiments, the first angle and/or the second angle are/is an acute angle.

When the first angle is an acute angle, the scanned image acquired by the first photographic apparatus may include an edge line (i.e., the first edge line) in the side face of the tab that is close to the battery cell body. When the second angle is an acute angle, the scanned image acquired by the second photographic apparatus may include an edge line (i.e., the second edge line) in the side face of the tab that is close to the cover plate. As such, the omnidirectional photographing of the side face of the tab is realized, improving the accuracy of tab inspection.

In some embodiments, the first angle and/or the second angle satisfy the range of 10° to 30°. Based on this angle range, the omnidirectional photographing of the side face of the tab may be realized, improving the accuracy of tab inspection.

In some embodiments, the distance expansion apparatus includes a first clamping portion and a second clamping portion,
the first clamping portion is configured to clamp the battery cell body; and
the second clamping portion is configured to clamp the cover plate and provide a force to the cover plate away from the battery cell body.

Through clamping and fixing the battery cell body by the first clamping portion, and clamping the cover plate and providing a force to the cover plate away from the battery cell body by the second clamping portion, the distance between the battery cell body and the cover plate may be expanded, thereby exposing the side face of the tab and enabling tab inspection.

In some embodiments, the first clamping portion includes a plastic block, and the second clamping portion includes a cylinder clamping jaw,
the plastic block is configured to clamp the battery cell body; and
the cylinder clamping jaw is configured to clamp the cover plate and provide a force to the cover plate away from the battery cell body.

The battery cell body is clamped and fixed by the plastic block, the cover plate is clamped by a gripper in the cylinder clamping jaw, and a vertically telescopic cylinder is started to provide the cover plate with a force directed away from the battery cell body, so as to expand the distance between the battery cell body and the cover plate, thereby exposing the side face of the tab, so that an inspection for the tab is realized.

In some embodiments, the upper computer is further configured to determine the corresponding region of the side face of the tab in the first scanned image; determine a crack length of the side face of the tab according to image features in the corresponding region; and determine that the side face of the tab is fractured when the crack length is greater than or equal to a preset length.

The features within the corresponding region of the side face of the tab in the scanned image are analyzed through the upper computer to determine the crack length of the side face of the tab, and whether the side face of the tab is fractured is determined based on the crack length of the side face of the tab, so as to improve the accuracy of the inspection for the tab.

In some embodiments, the battery cell further includes an adapter plate disposed between the tab and the cover plate,
the light source is further configured to light the adapter plate;
the photographic apparatus is further configured to acquire a second scanned image containing the adapter plate; and
the upper computer is further configured to determine whether the adapter plate is deformed based on the second scanned image.

In this embodiment, a further inspection may be performed to determine whether the adapter plate in the battery cell is deformed, so as to improve the safety of the battery cell.

In some embodiments, the upper computer is further configured to determine the corresponding position of the adapter plate in the second scanned image; determine the position of an inspection caliper according to the corresponding position; capture the edge line of the adapter plate using the inspection caliper and calculate the angle of the edge line of the adapter plate; and determine that the adapter plate is deformed when the angle of the edge line is greater than or equal to a preset value. In this embodiment, an inspection may be performed with the inspection caliper to determine whether the adapter plate in the scanned image is deformed, so as to improve the inspection accuracy.

In some embodiments, the tab inspection system further includes a control apparatus, and the upper computer is further configured to send inspection results to the control apparatus; and the control apparatus is configured to determine whether to perform scrapping treatment on the battery cell based on the inspection results. In this embodiment, the control apparatus determines whether to perform scrapping treatment on the battery cell, so as to improve the safety of the battery cell.

In some embodiments, the control apparatus is configured to perform scrapping treatment on the battery cell when the inspection result indicates that the side face of the tab is fractured. Scrapping treatment on the battery cell with the tab having the fractured side face may prevent battery cell safety incidents caused by the fractured tab.

In some embodiments, the control apparatus is configured to perform scrapping treatment on the battery cell when the inspection result indicates that the adapter plate is deformed. Scrapping treatment on the battery cell with the adapter plate deformed may prevent battery cell safety incidents caused by the deformed adapter plate.

In some embodiments, the light source includes an area light source, and when the photographic apparatus is configured to acquire the first scanned image, the lighting range of the area light source covers the side face of the tab. By using this area light source to light the side face of the tab, the uniformity of lighting on the side face of the tab may be improved, thereby improving the accuracy of tab inspection.

In some embodiments, when the photographic apparatus is configured to acquire the second scanned image, the lighting range of the area light source covers the adapter plate. By using this area light source to light the adapter plate, the uniformity of lighting on the adapter plate may be improved, thereby improving the accuracy of the adapter plate.

In some embodiments, the tab inspection system further includes a lifting apparatus for lifting the battery cell to a photographing position corresponding to the side face of the tab to ensure the accuracy of tab inspection.

In some embodiments, the tab inspection system further includes a mounting bracket, on which both the photographic apparatus and the light source are mounted,
the light source and the photographic apparatus are disposed on the side face of the tab, the photographic apparatus is configured to receive the reflected light from the side face of the tab when the light source lights the side face of the tab, and to form an image based on the reflected light to obtain the first scanned image. By placing the photographic apparatus and the light source on the same mounting bracket, the light source may be adjusted synchronously when the position of the photographic apparatus is adjusted, thereby improving the inspection efficiency.

In a second aspect, the present application provides a tab inspection method, wherein the tab inspection method is performed through a control apparatus and is used for inspecting tabs in a battery cell obtained after cell combining processing, the battery cell including a battery cell body, tabs and a cover plate, the tabs being disposed between the cover plate and the battery cell body, and the tab inspection method includes:
controlling a distance expansion apparatus to expand the distance between the battery cell body and the cover plate, so as to expose a side face of a tab;
driving a light source to light the side face of the tab; and
controlling a photographic apparatus to acquire a first scanned image containing the side face of the tab and transmit the first scanned image to the upper computer so that the upper computer may determine whether the side face of the tab is fractured based on the first scanned image.

Because the tab is blocked between the cover plate and the battery cell body after the battery cell undergoes the cell combining processing, it is difficult to inspect whether the tab is fractured. Based on the embodiments of the present application, after the battery cell undergoes the cell combining processing, the distance expansion apparatus may be employed to expand the distance between the battery cell body and the cover plate, so as to expose the side face of the tab, such that an inspection for the tab is realized, thereby improving the safety of the battery cell.

In some embodiments, the battery cell further includes an adapter plate disposed between the tab and the cover plate, and the tab inspection method further includes:
driving the light source to light the adapter plate; and
controlling the photographic apparatus to acquire a second scanned image containing the adapter plate and transmit the second scanned image to the upper computer so that the upper computer may determine whether the adapter plate is deformed based on the second scanned image.

In this embodiment, a further inspection may be performed to determine whether the adapter plate in the battery cell is deformed, so as to improve the safety of the battery cell.

In some embodiments, the tab inspection method further includes:
obtaining an inspection result from the upper computer; and
when the inspection result indicates that the side face of the tab is fractured, controlling to perform scrapping treatment on the battery cell; and/or
when the inspection result determines that the adapter plate is deformed, controlling to perform scrapping treatment on the battery cell.

Performing scrapping treatment on the battery cell with the tab having the fractured side face may avoid a battery cell safety incident caused by the fractured tab; and performing scrapping treatment on the battery cell with the adapter plate deformed may avoid a battery cell safety incident caused by the deformed adapter plate.

In some embodiments, the distance expansion apparatus includes a first clamping portion and a second clamping portion, and the controlling the distance expansion apparatus to expand the distance between the battery cell body and the cover plate includes:
controlling the first clamping portion to clamp the battery cell body; and
controlling the second clamping portion to clamp the cover plate and providing a force to the cover plate away from the battery cell body.

Through clamping and fixing the battery cell body by the first clamping portion, and clamping the cover plate and providing a force to the cover plate away from the battery cell body by the second clamping portion, the distance between the battery cell body and the cover plate may be expanded, thereby exposing the side face of the tab and enabling tab inspection.

In a third aspect, the present application provides a tab inspection method, wherein the tab inspection method is performed through an upper computer and is used for inspecting tabs in a battery cell obtained after cell combining processing, the battery cell including a battery cell body, tabs and a cover plate, the tabs being disposed between the cover plate and the battery cell body, and the method includes:
using a distance expansion apparatus to expand the distance between the battery cell body and the cover plate, so as to expose a side face of a tab;
using a light source to light the side face of the tab;
using a photographic apparatus to acquire a first scanned image containing the side face of the tab; and
determining whether the side face of the tab is fractured based on the first scanned image.

Because the tab is blocked between the cover plate and the battery cell body after the battery cell undergoes the cell combining processing, it is difficult to inspect whether the tab is fractured. Based on the embodiments of the present application, after the battery cell undergoes the cell combining processing, the distance expansion apparatus may be employed to expand the distance between the battery cell body and the cover plate, so as to expose the side face of the tab, such that an inspection for the tab is realized, thereby improving the safety of the battery cell.

In some embodiments, the determining whether the side face of the tab is fractured based on the first scanned image includes:
determining the corresponding region of the side face of the tab in the first scanned image; determining a crack length of the side face of the tab according to image features in the corresponding region; and determining that the side face of the tab is fractured when the crack length is greater than or equal to a preset length.

The features within the corresponding region of the side face of the tab in the scanned image are analyzed to determine the crack length of the side face of the tab, and whether the side face of the tab is fractured is determined based on the crack length of the side face of the tab, so as to improve the accuracy of the inspection for the tab.

In some embodiments, the battery cell further includes an adapter plate disposed between the tab and the cover plate, and the tab inspection method further includes:
using the light source to light the adapter plate;
using the photographic apparatus to acquire a second scanned image containing the adapter plate; and
determining whether the adapter plate is deformed based on the second scanned image.

In this embodiment, a further inspection may be performed to determine whether the adapter plate in the battery cell is deformed, so as to improve the safety of the battery cell.

In some embodiments, the determining whether the adapter plate is deformed based on the second scanned image includes:
determining the corresponding position of the adapter plate in the second scanned image; determining the position of an inspection caliper according to the corresponding position; capturing the edge line of the adapter plate using the inspection caliper and calculating the angle of the edge line of the adapter plate; and determining that the adapter plate is deformed when the angle of the edge line is greater than or equal to a preset value.

In this embodiment, an inspection may be performed with the inspection caliper to determine whether the adapter plate in the scanned image is deformed, so as to improve the inspection accuracy.

In some embodiments, the tab inspection method further includes:
sending an inspection result to a control apparatus so that the control apparatus may determine whether to perform scrapping treatment on the battery cell based on the inspection result.

The inspection result is sent to the control apparatus, so that the control apparatus may determine whether to perform scrapping treatment on the battery cell, thereby avoiding a battery cell safety incident caused by the fractured tab or the deformed adapter plate.

The above description is only a summary of the technical solutions of the present application, and in order to understand more clearly the technical means of the present application for implementing in accordance with the contents of the specification, and in order to make the above and other objectives, features and advantages of the present application more apparent and readily understandable, detailed description of the present application are hereby set forth below.

### BRIEF DESCRIPTION OF THE DRAWINGS

FIG. 1 is a schematic structural diagram of a battery cell after cell combining according to some embodiments of the present application;
FIG. 2 is a schematic structural diagram of a tab inspection system according to some embodiments of the present application;
FIG. 3 is a schematic diagram comparing the battery cell structures before and after distance expansion according to some embodiments of the present application;
FIG. 4 is a specific schematic structural diagram of a tab inspection system according to some embodiments of the present application;
FIG. 5 is a schematic structural diagram of a battery cell including an adapter plate according to some embodiments of the present application;
Fig. 6 is a flow chart of a tab inspection method according to some embodiments of the present application;
Fig. 7 is a flow chart of a tab inspection method according to some embodiments of the present application.

Reference numerals in the Detailed Description are as follows:
distance expansion apparatus 10, light source 20, photographic apparatus 30, upper computer 40;
battery cell body 50, cover plate 60, tab 70, adapter plate 80;
first photographic apparatus 31, second photographic apparatus 32;
first clamping portion 11, second clamping portion 12.

### DETAILED DESCRIPTION

Embodiments in technical solutions of the present application will be described in detail below in conjunction with the accompanying drawings. The following embodiments are only configured to illustrate the technical solutions of the present application more clearly, and thus are only interpreted as examples, rather than configured to limit the scope of protection of the present application.

Unless otherwise defined, all technical and scientific terms used herein have the same meanings as generally understood by those skilled in the art of the present application; the terms used herein are intended only to describe specific embodiments and are not intended to limit the present application; and the terms "including" and "having" and any variations thereof in the description and claims of the present application and in the foregoing description of the accompanying drawings are intended to cover non-exclusive inclusions.

In the descriptions of the embodiments of the present application, the technical terms "first," "second," and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference to "an embodiment" herein means that a particular feature, structure, or characteristic described with reference to an embodiment may be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is merely an association that describes the associated object, indicating that there may be three kinds of relationships, such as A and/or B may indicate the following three situations: A exists alone, A and B exist at the same time, and B exists alone. Moreover, the character "/" herein generally indicates that the context objects are in an "or" relationship.

In the description of the embodiments of the present application, the term "a plurality of" refers to more than two (including two), and similarly, "a plurality of groups" refers to more than two groups (including two groups); and "a plurality of sheets" refers to more than two sheets (including two sheets).

In the description of the embodiments of the present application, the orientation or positional relationships indicated by the technical terms "center," "longitudinal," "transverse," "length," "width," "thickness," "upper," "lower," "front," "back," "left," "right," "vertical," "horizontal," "top," "bottom," "inner," "outer," "clockwise," "counterclockwise," "axial," "radial," "circumferential," etc. are based on the orientation or positional relationships shown in the accompanying drawings, and are only for convenience of description of the present application and simplification of the description, rather than indicating or implying that the indicated apparatus or element must have a specific orientation, be constructed and operate in a specific orientation, and therefore, may not be understood as a limitation to the present application.

In the description of the embodiments of the present application, unless otherwise expressly specified and limited, the technical terms "mount," "connect," "connection," "fix," etc. should be understood in a broad sense, such as, a fixed connection, a detachable connection, or an integral connection; a mechanical connection, or an electrical connection; directly connect, indirectly connect through an intermediate medium, an internal communication of two elements, or interaction between two elements. For those of ordinary skill in the art, the specific meaning of the above terms in the embodiments of the present application may be understood according to the specific situation. It should be understood that the specific embodiments described herein are merely for explaining the present application and are not intended to limit the present application.

The battery involved in the embodiments of the present application may be used in an electrical apparatus using the battery as a power source or various energy storage systems using the battery as an energy storage element. The electrical apparatus may be but not limited to mobile phones, tablet computers, notebook computers, electric toys, electric tools, electric vehicles, electric automobiles, ships, spacecraft and the like. The electric toys may include a fixed or mobile electric toy, such as a game machine, an electric automobile toy, an electric ship toy and an electric aircraft toy, and the spacecraft may include an aircraft, a rocket, a space shuttle, a spacecraft and the like.

Tabs are a type of raw material used in lithium-ion polymer battery products. For example, mobile phone batteries, Bluetooth batteries, laptop batteries, and vehicle batteries all require the use of tabs. Batteries have positive and negative electrodes, and the tabs are the conductive metal components that lead positive and negative electrodes out from the battery cell. During the battery assembly process, the tabs are subjected to processes such as cutting, shaping, laser welder, bending, and bare cell combining. These processes may cause the tabs to fracture, which will lead to product scrapping. If such defective products reach the customer, it will cause serious quality incidents.

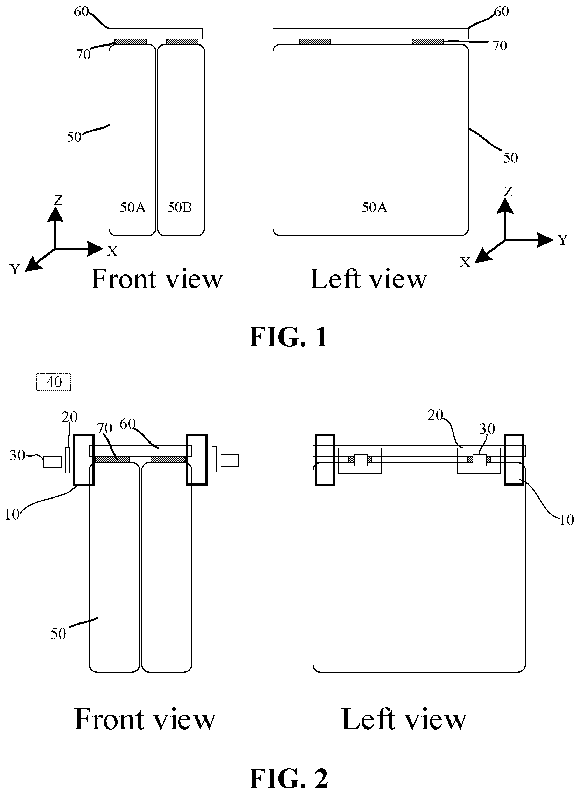

Current technology typically involves using a photographic apparatus to inspect the tabs before the battery cells are combined. Because the tab is blocked between the cover plate and the battery cell body after the battery cell undergoes the cell combining processing, it is difficult to inspect whether the tab is fractured. As shown in FIG. 1, which is a schematic structural diagram of a battery cell after cell combining. A tab 70 is blocked between a cover plate 60 and a battery cell body 50. However, during the cell combining process, the tabs are prone to fracture. Current technology may only inspect the shape of the tabs before the battery cells are combined, but may not inspect whether the tabs are fractured after cell combining, which may lead to missed inspection of abnormal battery cells and battery cell safety issues.

To address the problem of the current technology's inability to inspect the tab subjected to cell combining to determine whether it is fractured, the present application provides a tab inspection system that is capable of using a distance expansion apparatus to expand the distance between the battery cell body and the cover plate after the cell combining processing of the battery cell, so as to expose a side face of the tab, such that an inspection for the tab is realized, thereby improving the safety of the battery cell.

Before introducing the solutions of the present application, the side face of the tab is described first.

It is to be understood that in practice, a metal strip (an aluminum strip, a nickel strip, a copper strip, etc., where the metal strip may be understood as a thin metal plate) is usually used to prepare a tab. Specifically, the metal strip undergoes operations such as segmenting, hot pressing, cooling, and trimming to be cut into a single tab. Furthermore, in a battery assembly process, the tab are subjected to processes such as cutting, shaping, laser welder, bending, and bare battery cell combining.

Based on this, the side face of the tab involved in the present application may be understood as a strip surface (i.e., a plate surface) of the metal strip processed by the above-mentioned processes.

Additionally, it is to be understood that the cell combining processing refers to the processing of combining a plurality of battery cell bodies, where each battery cell body may be provided with two tabs, including one positive tab and one negative tab. As shown in FIG. 1, the cell combining processing refers to the processing of combining a battery cell body 50A and a battery cell body 50B, where the battery cell body 50A may be provided with two tabs (see the left view in FIG. 1), including one positive tab and one negative tab; and the battery cell body 50B likewise may be provided with two tabs, including one positive tab and one negative tab.

As shown in FIG. 1, a spatial coordinate system is set up: an arrangement direction of a plurality of battery cell bodies is set as a direction X, that is, the plurality of battery cell bodies (for example, the battery cell body 50A and the battery cell body 50B) are distributed along the direction X, where the direction X is equivalent to the first direction mentioned below; an arrangement direction of two tabs in one battery cell body is set as a direction Y, that is, the two tabs in one battery cell body are distributed along the direction Y; and a direction perpendicular to the cover plate is set as a direction Z.

Based on this, the side face of the tab involved in the present application may be understood as a surface of the tab that is parallel to the direction Y. For example, in the left view of FIG. 1, the two tabs are distributed along the direction Y, so a visible surface of the tab in the left view is the side face of the tab.

The tab inspection system provided in the present application is configured to inspect a tab in a battery cell obtained by means of cell combining processing. The battery cell includes a battery cell body, the tab, and a cover plate, where the tab is arranged between the cover plate and the battery cell body.

As shown in FIG. 2, the tab inspection system includes: a distance expansion apparatus 10, a light source 20, a photographic apparatus 30, and an upper computer 40.

The distance expansion apparatus 10 is configured to expand the distance between the battery cell body 50 and the cover plate 60, so as to expose a side face of the tab 70.

The tab is generally connected to the cover plate by means of welding or bonding. The present application utilizes the ductility of a material at a connection between the tab and the cover plate under an external force to expand the distance between the battery cell body and the cover plate, so as to expose the side face of the tab, such that an inspection for the tab after cell combining is realized.

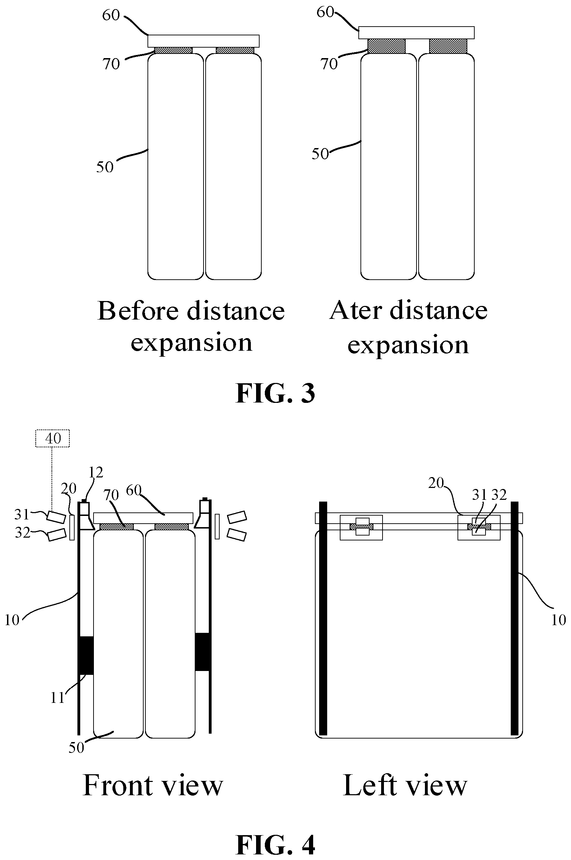

Referring to the schematic comparative diagram of battery cell structures before distance expansion and after distance expansion shown in FIG. 3, it may be seen that after the distance expansion, the distance between the battery cell body 50 and the cover plate 60 is expanded, exposing a contour of the side face of the tab 70.

The light source 20 is configured to light the side face of the tab 70.

The light source 20 may include an area light source or may include other types of light sources. This is not limited in this embodiment. When the side face of the tab 70 is lit by the area light source, the lighting uniformity for the side face of the tab may be improved, thereby improving the accuracy of the tab inspection.

The photographic apparatus 30 is configured to acquire a first scanned image including the side face of the tab 70.

The photographic apparatus 30 may include a camera, or may include other types of photographic apparatuses. This is not limited in this embodiment. The camera may be a charge coupled device (CCD) camera, a complementary metal oxide semiconductor (CMOS) camera, or may be other forms of cameras. This is not limited in this embodiment.

When the photographic apparatus 30 is configured to acquire the first scanned image, an illumination range of the light source 20 (e.g., the area light source) may cover the side face of the tab 70.

By capturing an image through the photographic apparatus 30 and transmitting the captured image to the upper computer 40 for inspection and analysis, an inspection result for the image may be obtained.

The upper computer 40 is configured to determine, based on the first scanned image, whether the side face of the tab 70 is fractured.

The upper computer 40 is a computer or single chip microcomputer that may give out an operation command. The upper computer 40 may be a terminal device, such as a mobile phone, a computer, or a tablet computer, or may be other forms of business processing terminals. This is not limited in this embodiment. By inspecting and analyzing, through the upper computer 40, the scanned image acquired by the photographic apparatus 30, the inspection for the tab 70 may be realized.

A battery cell typically may include a plurality of tabs. In some embodiments, optionally, a light source and a photographic apparatus may be provided correspondingly for each of the plurality of tabs. For example, one light source and one photographic apparatus may be provided correspondingly for each tab. For another example, one light source and a plurality of photographic apparatuses may be provided correspondingly for each tab, and different tabs may correspond to the same number or different numbers of photographic apparatuses as well as the same photographing angle or different photographing angles. For still another example, one or more photographic apparatuses may be provided for each of a plurality of tabs on the same side face, with the tabs sharing one light source, and the way to arrange the light source and the photographic apparatuses is not limited in this embodiment.

Taking one tab (e.g., a first tab) of the plurality of tabs as an example, in some embodiments, as shown in FIG. 4, the tab may correspond to one light source and two photographic apparatuses, where the two photographic apparatuses may include a first photographic apparatus 31 and a second photographic apparatus 32. An included angle between a photographing direction of the first photographic apparatus 31 and the first direction is a first angle, and a scanned image acquired by the first photographic apparatus 31 includes a first edge line of the side face of the tab, where the first edge line is close to the battery cell body 50, and the first direction is perpendicular to the side face of the tab. An included angle between a photographing direction of the second photographic apparatus 32 and the first direction is a second angle, and a scanned image acquired by the second photographic apparatus 32 includes a second edge line of the side face of the tab, where the second edge line is close to the cover plate 60. By photographing the side face of the tab along different directions through the two photographic apparatuses, omnidirectional photographing of the side face of the tab may be realized, improving the accuracy of the tab inspection.

In some embodiments, optionally, as shown in FIG. 4, the first photographic apparatus 31 may be disposed above the second photographic apparatus 32. The first photographic apparatus 31 may perform photographing from top to bottom based on the first angle, and the second photographic apparatus 32 may perform photographing from bottom to top based on the second angle. The first angle is the included angle between the photographing direction of the first photographic apparatus 31 and the first direction. The second angle is the included angle between the photographing direction of the second photographic apparatus 32 and the first direction, and the first direction is perpendicular to the side face of the tab.

In some embodiments, optionally, the first angle and/or the second angle may be acute.

When the first angle is an acute angle, the scanned image acquired by the first photographic apparatus 31 may include an edge line (i.e., the first edge line) in the corresponding side face of the tab that is close to the battery cell body. When the second angle is an acute angle, the scanned image acquired by the second photographic apparatus 32 may include an edge line (i.e., the second edge line) in the corresponding side face of the tab that is close to the cover plate. As such, the omnidirectional photographing of the side face of the tab is realized, improving the accuracy of the tab inspection.

In some embodiments, optionally, the first angle and/or the second angle may satisfy the range of 10° to 30°. Based on this angle range, the omnidirectional photographing of the side face of the tab may be realized, improving the accuracy of the tab inspection.

In some embodiments, optionally, the first angle and/or the second angle may be 15°. Based on this angle, the omnidirectional photographing of the side face of the tab may be realized, improving the accuracy of the tab inspection.

The first angle and the second angle mentioned above may be the same or may be different. This is not limited in the present application.

In some embodiments, optionally, when the distance expansion apparatus 10 is expanding the distance between the battery cell body 50 and the cover plate 60, it may fix the battery cell body 50 and apply a force directed away from the battery cell body 50 to the cover plate 60; or it may fix the cover plate 60 and apply a force directed away from the cover plate 60 to the battery cell body 50. Alternatively, it may apply a force directed away from the cover plate 60 to the battery cell body 50 while applying a force directed away from the battery cell body 50 to the cover plate 60. The distance between the battery cell body 50 and the cover plate 60 may be expanded in any case, thereby exposing the side face of the tab 70.

In some embodiments, optionally, as shown in FIG. 4, the distance expansion apparatus 10 may include a first clamping portion 11 and a second clamping portion 12. The first clamping portion 11 is configured to clamp the battery cell body 50; and the second clamping portion 12 is configured to clamp the cover plate 60 and provide the cover plate 60 with a force directed away from the battery cell body 50. The battery cell body 50 is clamped and fixed by the first clamping portion 11, the cover plate 60 is clamped by the second clamping portion 12, and the cover plate 60 is provided with a force directed away from the battery cell body 50, so as to expand the distance between the battery cell body 50 and the cover plate 60, thereby exposing the side face of the tab 70, so that an inspection for the tab 70 is realized.

In some embodiments, optionally, the first clamping portion 11 includes a plastic block, and the second clamping portion 12 includes a cylinder clamping jaw. The plastic block is used to clamp the battery cell body 50; and the cylinder clamping jaw is used to clamp the cover plate 60 and provide the cover plate 60 with a force directed away from the battery cell body 50. The battery cell body 50 is clamped and fixed by the plastic block, the cover plate 60 is clamped by a gripper in the cylinder clamping jaw, and a vertically telescopic cylinder is started to provide the cover plate 60 with a force directed away from the battery cell body 50, so as to expand the distance between the battery cell body 50 and the cover plate 60, thereby exposing the side face of the tab 70, so that an inspection for the tab 70 is realized.

It is to be understood that the type, number, and position of the distance expansion apparatuses 10 shown in FIGS. 2 and 4 are merely examples. This is not limited in this embodiment. In specific implementations, one battery cell may correspond to one distance expansion apparatus or may correspond to a plurality of distance expansion apparatuses.

In some embodiments, optionally, the upper computer 40 may further be configured to determine a corresponding region of the side face of the tab 70 in the first scanned image; determine a crack length of the side face of the tab 70 based on image features within the corresponding region; and when the crack length is greater than or equal to a preset length, determine that the side face of the tab 70 is fractured. The features within the corresponding region of the side face of the tab 70 in the scanned image are analyzed by the upper computer 40 to determine the crack length of the side face of the tab 70, and determining whether the side face of the tab 70 is fractured is carried out based on the crack length of the side face of the tab 70, so as to improve the accuracy of the inspection for the tab 70.

The corresponding region in the first scanned image may be understood as a region of interest (ROI) or an inspection box. It is to be understood that during image processing, a region to be processed is delineated with a box, a circle, an ellipse, an irregular polygon or other modes in an image being processed, and is referred to as a ROI or an inspection box.

In specific implementations, the upper computer 40 may first perform dynamic location on the first scanned image based on a contour of the cover plate, to draw an inspection ROI for the tab inspection, then use a deep learning algorithm to perform threshold segmentation on an image within the ROI, and calculate the crack length of the side face of the tab based on morphological features. The measured crack length is compared with the preset length. When the crack length is greater than or equal to the preset length, the side face of the tab is considered to be fractured; and when the crack length is less than the preset length, the side face of the tab is considered to be non-fractured.

The preset length may be a reference value derived by professional technicians through experiments. Different battery cell models may correspond to different reference values. This is not limited in this embodiment.

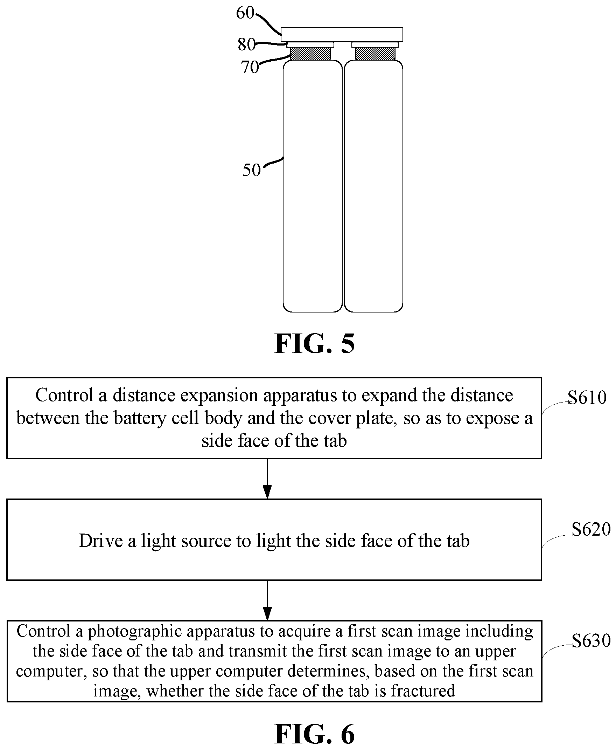

In some embodiments, optionally, as shown in FIG. 5, the battery cell may further include an adapter plate 80, where the adapter plate 80 is disposed between the tab 70 and the cover plate 60. The light source 20 is further configured to light the adapter plate 80; the photographic apparatus 30 is further configured to acquire a second scanned image including the adapter plate 80; and the upper computer 40 is further configured to determine, based on the second scanned image, whether the adapter plate 80 is deformed. In this embodiment, a further inspection may be performed to determine whether the adapter plate 80 in the battery cell is deformed, so as to improve the safety of the battery cell.

When the photographic apparatus 30 is configured to acquire the second scanned image, an illumination range of the light source 20 (e.g., the area light source) may cover the adapter plate 80.

The first scanned image and the second scanned image mentioned above may be the same scanned image or maybe two scanned images. This is not limited in this embodiment. That is, the first scanned image acquired by the photographic apparatus may include both the side face of the tab and the adapter plate.

In some embodiments, optionally, the upper computer 40 is further configured to determine a corresponding position of the adapter plate 80 in the second scanned image; determine a position of an inspection caliper based on the corresponding position; grab an edge line of the adapter plate 80 through the inspection caliper, and calculate an angle of the edge line of the adapter plate 80; and when the angle of the edge line is greater than or equal to a preset value, determine that the adapter plate 80 is deformed. In this embodiment, an inspection may be performed with the inspection caliper to determine whether the adapter plate 80 in the scanned image is deformed, so as to improve the inspection accuracy.

In specific implementations, the upper computer 40 may use a visual inspection algorithm to perform dynamic location on the second scanned image based on a contour of the cover plate, use a template matching algorithm to obtain the position of the adapter plate in the second scanned image, set the position of the inspection caliper based on this position, and then use the inspection caliper to grab the edge of the adapter plate and calculate the angle of the edge line of the adapter plate. When the angle is greater than or equal to the preset value, the adapter plate is considered to be deformed; and when the angle is less than the preset value, the adapter plate is considered to be non-deformed.

The preset value may be a reference value derived by professional technicians through experiments. Different battery cell models may correspond to different reference values. This is not limited in this embodiment.

In some embodiments, optionally, the tab inspection system may further include a control apparatus. The upper computer 40 is further configured to send an inspection result (i.e., an inspection result for the tab 70 and/or an inspection result for the adapter plate 80) to the control apparatus; and the control apparatus is configured to determine, based on the inspection result, whether to perform scrapping treatment on the battery cell. In this embodiment, the control apparatus determines whether to perform scrapping treatment on the battery cell, so as to improve the safety of the battery cell.

Optionally, the control apparatus may be configured to perform scrapping treatment on the battery cell when the inspection result indicates that the side face of the tab 70 is fractured, so as to avoid a battery cell safety incident caused by a tab fracture. The control apparatus may further be configured to perform scrapping treatment on the battery cell when the inspection result indicates that the adapter plate 80 is deformed, so as to avoid a battery cell safety incident caused by a deformation of the adapter plate 80.

A battery cell typically includes a plurality of tabs. In some embodiments, optionally, all the photographic apparatuses corresponding to the plurality of tabs may share one upper computer 40. During a tab inspection, all the photographic apparatuses are triggered simultaneously to perform photographing, so as to capture images. The upper computer 40 analyzes all the scanned images to determine whether the tab is fractured or whether the adapter plate is deformed. After determining the inspection result, the upper computer 40 sends the inspection result to the control apparatus. The control apparatus receives the inspection result, and determines, based on the inspection result, whether to perform scrapping treatment on the battery cell. Specifically, when the inspection result indicates an anomaly, the control apparatus performs scrapping treatment on the battery cell; and when the inspection result indicates no anomaly, the control apparatus controls the battery cell to enter a next process, such as processing of coating with a film.

In some embodiments, optionally, the tab inspection system may further include a lifting apparatus. The lifting apparatus is configured to lift the battery cell to a photographing position corresponding to the side face of the tab 70, so as to ensure the accuracy of the inspection for the tab 70.

In some embodiments, optionally, the tab inspection system may further include a mounting bracket, where both the photographic apparatus 30 and the light source 20 are disposed on the mounting bracket. The light source 20 and the photographic apparatus 30 are disposed on the side face of the tab 70. The photographic apparatus 30 is configured to receive reflected light from the side face of the tab 70 when the light source 20 lights the side face of the tab 70, and perform imaging based on the reflected light to obtain the above-mentioned scanned image, i.e., the first scanned image and/or the second scanned image. By disposing the photographic apparatus 30 and the light source 20 on the same mounting bracket, the light source 20 may be adjusted synchronously when the position of the photographic apparatus 30 is adjusted, enabling synchronous adjustments of the photographic apparatus 30 and the light source 20, thereby improving the inspection efficiency.

Since battery cells of different models may correspond to different positions of the photographic apparatus and of the light source, the positions of the photographic apparatus and the light source in the tab inspection system are required to be freely adjustable, for example, upper and lower positions, front and rear positions, and left and right positions are required to be freely adjustable.

In some embodiments, optionally, to improve the position adjustment efficiency for the photographic apparatus and the light source, the control apparatus may further be configured to control and implement free adjustments of the photographic apparatus position, the light source position, and an algorithm program based on the battery cell model.

In some embodiments, optionally, the mounting bracket may be provided with a sliding member, so as to adjust the positions of the photographic apparatus and the light source. The photographic apparatus and the light source may be fixed on a sliding table of the bracket and moved horizontally by the sliding member, achieving upward, downward, leftward, rightward, forward, and backward sliding, so as to improve the photographing flexibility and use compatibility. Fixing the photographic apparatus and the light source on the same bracket may ensure that the effect of a captured image does not change, improving the accuracy of the captured image.

According to some embodiments of the present application, a tab inspection method is provided. It is to be noted that the execution body of this embodiment may be a control apparatus, which may be a programmable logic controller (PLC) on a production line.

The tab inspection method may be used to inspect a tab in a battery cell obtained by means of cell combining processing. The battery cell includes a battery cell body, the tab, and a cover plate, where the tab is arranged between the cover plate and the battery cell body. As shown in FIG. 6, the tab inspection method includes the following steps:
Step S610: Control a distance expansion apparatus to expand the distance between the battery cell body and the cover plate, so as to expose a side face of the tab.
Step S620: Drive a light source to light the side face of the tab.
Step S630: Control a photographic apparatus to acquire a first scanned image including the side face of the tab and transmit the first scanned image to an upper computer, so that the upper computer determines, based on the first scanned image, whether the side face of the tab is fractured.

Because the tab is blocked between the cover plate and the battery cell body after the battery cell undergoes the cell combining processing, it is difficult to inspect whether the tab is fractured. Based on the embodiments of the present application, after the battery cell undergoes the cell combining processing, the distance expansion apparatus may be employed to expand the distance between the battery cell body and the cover plate, so as to expose the side face of the tab, such that an inspection for the tab is realized, thereby improving the safety of the battery cell.

According to some embodiments of the present application, optionally, the battery cell may further include an adapter plate disposed between the tab and the cover plate. The tab inspection method may further include:
driving the light source to light the adapter plate; and controlling the photographic apparatus to acquire a second scanned image including the adapter plate and transmit the second scanned image to the upper computer, so that the upper computer determines, based on the second scanned image, whether the adapter plate is deformed. In this embodiment, a further inspection may be performed to determine whether the adapter plate in the battery cell is deformed, so as to improve the safety of the battery cell.

According to some embodiments of the present application, optionally, the tab inspection method may further include: acquiring an inspection result from the upper computer; when the inspection result indicates that the side face of the tab is fractured, performing control to perform scrapping treatment on the battery cell; and/or when the inspection result determines that the adapter plate is deformed, performing control to perform scrapping treatment on the battery cell. Performing scrapping treatment on the battery cell with the tab having the fractured side face may avoid a battery cell safety incident caused by the fractured tab; and performing scrapping treatment on the battery cell with the adapter plate deformed may avoid a battery cell safety incident caused by the deformed adapter plate.

The distance expansion apparatus may include a first clamping portion and a second clamping portion. According to some embodiments of the present application, optionally, step S610 may further include:
controlling the first clamping portion to clamp the battery cell body; and controlling the second clamping portion to clamp the cover plate and provide the cover plate with a force directed away from the battery cell body. Through clamping and fixing the battery cell body by the first clamping portion, and clamping the cover plate and providing a force to the cover plate away from the battery cell body by the second clamping portion, the distance between the battery cell body and the cover plate may be expanded, thereby exposing the side face of the tab and enabling tab inspection.

According to some embodiments of the present application, optionally, before step S610, the tab inspection method may further include: controlling a lifting apparatus to lift the battery cell to a photographing position. After step S610, that is, after controlling the distance expansion apparatus to expand the distance between the battery cell body and the cover plate to expose the side face of the tab, the tab inspection method may further include: sending a trigger signal to the photographic apparatus to trigger the photographic apparatus to perform photographing, so as to acquire the first scanned image including the side face of the tab.

According to some embodiments of the present application, optionally, after controlling the photographic apparatus to acquire the first scanned image including the side face of the tab and transmit the first scanned image to the upper computer, the tab inspection method may further include: receiving a photographing completion signal sent by the upper computer; and controlling the battery cell to enter a next production process, such as a process of coating with a film. It is to be understood that this operation may be performed when the upper computer has received the scanned image.

Since it takes a lot of time for the upper computer to inspect the scanned image to determine whether an anomaly exists, if determining whether to carry out a next process is performed based on an inspection result after the upper computer completes the inspection, a production line will experience a halt, resulting in low production efficiency. In this embodiment, after the photographing is completed, the photographing completion signal sent by the upper computer may be received; and based on the photographing completion signal, the battery cell may be controlled to enter the next production process, such as a process of coating with a film. Upon the subsequent receipt of the inspection result from the upper computer, a decision on whether scrapping treatment is to be performed on the battery cell is made. With this embodiment, the production efficiency may be improved while an inspection for the scanned image is performed.

According to some embodiments of the present application, a tab inspection method is provided. It is to be noted that the execution body of this embodiment may be an upper computer.

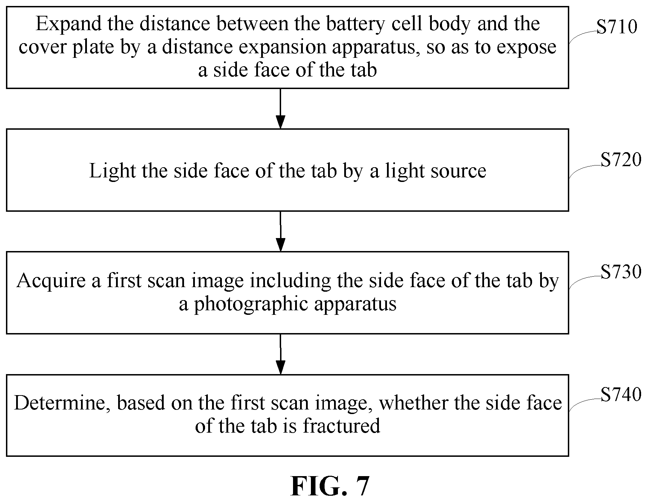

The tab inspection method may be used to inspect a tab in a battery cell obtained by means of cell combining processing. The battery cell includes a battery cell body, the tab, and a cover plate, where the tab is arranged between the cover plate and the battery cell body. As shown in FIG. 7, the tab inspection method includes the following steps:
Step S710: Expand the distance between the battery cell body and the cover plate by a distance expansion apparatus, so as to expose a side face of the tab.
Step S720: Light the side face of the tab by a light source.
Step S730: Acquire a first scanned image including the side face of the tab by a photographic apparatus.
Step S740: Determine, based on the first scanned image, whether the side face of the tab is fractured.

Because the tab is blocked between the cover plate and the battery cell body after the battery cell undergoes the cell combining processing, it is difficult to inspect whether the tab is fractured. Based on the embodiments of the present application, after the battery cell undergoes the cell combining processing, the distance expansion apparatus may be employed to expand the distance between the battery cell body and the cover plate, so as to expose the side face of the tab, such that an inspection for the tab is realized, thereby improving the safety of the battery cell.

According to some embodiments of the present application, optionally, step S740 may further include: determining a corresponding region of the side face of the tab in the first scanned image; determining a crack length of the side face of the tab based on image features within the corresponding region; and when the crack length is greater than or equal to a preset length, determining that the side face of the tab is fractured. The features within the corresponding region of the side face of the tab in the scanned image are analyzed to determine the crack length of the side face of the tab, and whether the side face of the tab is fractured is determined based on the crack length of the side face of the tab, so as to improve the accuracy of the inspection for the tab.

In specific implementations, dynamic location may first be performed on the first scanned image based on a contour of the cover plate, to draw an inspection ROI for the tab inspection, then a deep learning algorithm may be used to perform threshold segmentation on an image within the ROI, and the crack length of the side face of the tab may be calculated based on morphological features. The measured crack length is compared with the preset length. When the crack length is greater than or equal to the preset length, the side face of the tab is considered to be fractured; and when the crack length is less than the preset length, the side face of the tab is considered to be non-fractured.

The battery cell may further include an adapter plate disposed between the tab and the cover plate. The tab inspection method may further include: lighting the adapter plate by the light source; acquiring a second scanned image including the adapter plate by the photographic apparatus; and determining, based on the second scanned image, whether the adapter plate is deformed. In this embodiment, a further inspection may be performed to determine whether the adapter plate in the battery cell is deformed, so as to improve the safety of the battery cell.

According to some embodiments of the present application, optionally, determining, based on the second scanned image, whether the adapter plate is deformed includes: determining a corresponding position of the adapter plate in the second scanned image; determining a position of an inspection caliper based on the corresponding position; grabbing an edge line of the adapter plate through the inspection caliper, and calculating an angle of the edge line of the adapter plate; and when the angle of the edge line is greater than or equal to a preset value, determining that the adapter plate is deformed. In this embodiment, an inspection may be performed with the inspection caliper to determine whether the adapter plate in the scanned image is deformed, so as to improve the inspection accuracy.

In specific implementations, a visual inspection algorithm may be used to perform dynamic location on the second scanned image based on a contour of the cover plate, a template matching algorithm may be used to obtain the position of the adapter plate in the second scanned image, the position of the inspection caliper may be set based on this position, and then the inspection caliper may be used to grab the edge of the adapter plate and calculate the angle of the edge line of the adapter plate. When the angle is greater than or equal to the preset value, the adapter plate is considered to be deformed; and when the angle is less than the preset value, the adapter plate is considered to be non-deformed.

According to some embodiments of the present application, optionally, the tab inspection method may further include: sending an inspection result to a control apparatus, so that the control apparatus determines, based on the inspection result, whether to perform scrapping treatment on the battery cell. The inspection result is sent to the control apparatus, so that the control apparatus may determine whether to perform scrapping treatment on the battery cell, thereby avoiding a battery cell safety incident caused by the fractured tab or the deformed adapter plate.

According to some embodiments of the present application, optionally, after acquiring the first scanned image including the side face of the tab, the tab inspection method may further include: sending a photographing completion signal to the control apparatus, so that the control apparatus controls the battery cell to enter a next production process, such as a process of coating with a film. It is to be understood that this operation may be performed when the upper computer has received the scanned image.

Since it requires a lot of time for the upper computer to inspect the scanned image acquired from a camera in order to determine whether an anomaly exists, if determining whether to carry out a next process is performed based on an inspection result after the upper computer completes the inspection, an production line will experience a halt, resulting in low production efficiency. In this embodiment, after the photographing is completed, the photographing completion signal may be sent to the control apparatus, so that the control apparatus controls the battery cell to enter the next production process, such as a process of coating with a film. As such, when having received the inspection result subsequently, the control apparatus may decide whether to perform scrapping treatment on the battery cell. With this embodiment, the production efficiency may be improved while an inspection for the scanned image is performed.

According to some embodiments of the present application, a tab inspection apparatus is provided. The tab inspection apparatus includes: a memory, a processor, and a tab inspection program stored on the memory and runnable on the processor, where when the tab inspection program is executed by the processor, the above-mentioned tab inspection method is implemented.

According to some embodiments of the present application, a storage medium is provided. A tab inspection program is stored on the storage medium, and when the tab inspection program is executed by a processor, the above-mentioned tab inspection method is implemented.

Finally, it is to be noted that the above embodiments are merely used for illustrating the technical solutions of the present application, not for limiting them. Although the present application is described in detail with reference to the foregoing embodiments, those of ordinary skill in the art should understand that they may still modify the technical solutions described in the foregoing embodiments, or equivalently substitute some or all of the technical features therein. These modifications or substitutions do not cause the essence of the corresponding technical solutions to depart from the scope of the technical solutions of the embodiments of the present application, and they should be covered by the scope of the claims and specification of the present application. In particular, the technical features mentioned in the various embodiments may be combined in any manner provided that there is no structural conflict. The present application is not limited to the specific embodiments disclosed herein, but rather includes all technical solutions falling within the scope of the claims.

## Claims

1. A tab inspection system, wherein the tab inspection system is configured to inspect tabs in a battery cell obtained after cell combining processing, the battery cell comprises a battery cell body, tabs and a cover plate, the tabs are disposed between the cover plate and the battery cell body, and the tab inspection system comprises: a distance expansion apparatus, a light source, a photographic apparatus and an upper computer;
the distance expansion apparatus is configured to expand the distance between the battery cell body and the cover plate, so as to expose a side face of a tab;
the light source is configured to light the side face of the tab;
the photographic apparatus is configured to acquire a first scanned image containing the side face of the tab; and
the upper computer is configured to determine whether the side face of the tab is fractured based on the first scanned image.

2. The tab inspection system of claim 1, wherein the battery cell comprises multiple tabs, a first tab of the multiple tabs corresponds to one light source and two photographic apparatuses, and the two photographic apparatuses comprise a first photographic apparatus and a second photographic apparatus,
wherein an angle between the photographing direction of the first photographic apparatus and a first direction is a first angle, the scanned image obtained based on the first photographic apparatus comprises a first edge line of the side of the first tab, the first edge line is close to the battery cell body, and the first direction is perpendicular to the side of the first tab; and
an angle between the photographing direction of the second photographic apparatus and the first direction is a second angle, the scanned image obtained based on the second photographic apparatus comprises a second edge line of the side of the first tab, and the second edge line is close to the cover plate.

3. The tab inspection system of claim 2, wherein the first angle and/or the second angle are/is an acute angle.

4. The tab inspection system of any one of claims 1 to 3, wherein the distance expansion apparatus comprises a first clamping portion and a second clamping portion,
the first clamping portion is configured to clamp the battery cell body; and
the second clamping portion is configured to clamp the cover plate and provide a force to the cover plate away from the battery cell body.

5. The tab inspection system of claim 4, wherein the first clamping portion comprises a plastic block, and the second clamping portion comprises a cylinder clamping jaw,
the plastic block is configured to clamp the battery cell body; and
the cylinder clamping jaw is configured to clamp the cover plate and provide a force to the cover plate away from the battery cell body.

6. The tab inspection system of any one of claims 1 to 5, wherein the upper computer is further configured to determine the corresponding region of the side face of the tab in the first scanned image; determine a crack length of the side face of the tab according to image features in the corresponding region; and determine that the side face of the tab is fractured when the crack length is greater than or equal to a preset length.

7. The tab inspection system of any one of claims 1 to 6, wherein the battery cell further comprises an adapter plate disposed between the tab and the cover plate,
the light source is further configured to light the adapter plate;
the photographic apparatus is further configured to acquire a second scanned image containing the adapter plate; and
the upper computer is further configured to determine whether the adapter plate is deformed based on the second scanned image.

8. The tab inspection system of claim 7, wherein the upper computer is further configured to determine the corresponding position of the adapter plate in the second scanned image; determine the position of an inspection caliper according to the corresponding position; capture the edge line of the adapter plate using the inspection caliper and calculate the angle of the edge line of the adapter plate; and determine that the adapter plate is deformed when the angle of the edge line is greater than or equal to a preset value.

9. The tab inspection system of claim 8, wherein the tab inspection system further comprises a control apparatus,
the upper computer is further configured to send an inspection result to the control apparatus; and
the control apparatus is configured to determine whether to perform scrapping treatment on the battery cell based on the inspection result.

10. The tab inspection system of claim 9, wherein the control apparatus is configured to perform scrapping treatment on the battery cell when the inspection result indicates that the side face of the tab is fractured; and/or, to perform scrapping treatment on the battery cell when the inspection result indicates that the adapter plate is deformed.

11. The tab inspection system of any one of claims 7 to 10, wherein the light source comprises an area light source, and when the photographic apparatus is configured to acquire the first scanned image, the lighting range of the area light source covers the side face of the tab; or, when the photographic apparatus is configured to acquire the second scanned image, the lighting range of the area light source covers the adapter plate.

12. The tab inspection system of any one of claims 1 to 11, wherein the tab inspection system further comprises a lifting apparatus, and
the lifting apparatus is configured to lift the battery cell to the photographing position corresponding to the side face of the tab.

13. The tab inspection system of any one of claims 1 to 12, wherein the tab inspection system further comprises a mounting bracket, and the photographic apparatus and the light source are both disposed on the mounting bracket,
the light source and the photographic apparatus are disposed on the side face of the tab, the photographic apparatus is configured to receive the reflected light from the side face of the tab when the light source lights the side face of the tab, and to form an image based on the reflected light to obtain the first scanned image.

14. A tab inspection method, wherein the tab inspection method is performed through a control apparatus and is used for inspecting tabs in a battery cell obtained after cell combining processing, the battery cell comprising a battery cell body, tabs and a cover plate, the tabs being disposed between the cover plate and the battery cell body, and the tab inspection method comprises:
controlling a distance expansion apparatus to expand the distance between the battery cell body and the cover plate, so as to expose a side face of a tab;
driving a light source to light the side face of the tab; and
controlling a photographic apparatus to acquire a first scanned image containing the side face of the tab and transmit the first scanned image to the upper computer so that the upper computer can determine whether the side face of the tab is fractured based on the first scanned image.

15. The tab inspection method of claim 14, wherein the battery cell further comprises an adapter plate disposed between the tab and the cover plate, and the tab inspection method further comprises:
driving the light source to light the adapter plate; and
controlling the photographic apparatus to acquire a second scanned image containing the adapter plate and transmit the second scanned image to the upper computer so that the upper computer can determine whether the adapter plate is deformed based on the second scanned image.

16. The tab inspection method of claim 15, wherein the tab inspection method further comprises:
obtaining an inspection result from the upper computer; and
when the inspection result indicates that the side face of the tab is fractured, controlling to perform scrapping treatment on the battery cell; and/or
when the inspection result determines that the adapter plate is deformed, controlling to perform scrapping treatment on the battery cell.

17. The tab inspection method of any one of claims 14 to 16, wherein the distance expansion apparatus comprises a first clamping portion and a second clamping portion, and the controlling the distance expansion apparatus to expand the distance between the battery cell body and the cover plate comprises:
controlling the first clamping portion to clamp the battery cell body; and
controlling the second clamping portion to clamp the cover plate and providing a force to the cover plate away from the battery cell body.

18. A tab inspection method, wherein the tab inspection method is performed through an upper computer and is used for inspecting tabs in a battery cell obtained after cell combining processing, the battery cell comprising a battery cell body, tabs and a cover plate, the tabs being disposed between the cover plate and the battery cell body, and the method comprises:
using a distance expansion apparatus to expand the distance between the battery cell body and the cover plate, so as to expose a side face of a tab;
using a light source to light the side face of the tab;
using a photographic apparatus to acquire a first scanned image containing the side face of the tab; and
determining whether the side face of the tab is fractured based on the first scanned image.

19. The tab inspection method of claim 18, wherein the determining whether the side face of the tab is fractured based on the first scanned image comprises:
determining the corresponding region of the side face of the tab in the first scanned image; determining a crack length of the side face of the tab according to image features in the corresponding region; and determining that the side face of the tab is fractured when the crack length is greater than or equal to a preset length.

20. The tab inspection method of claim 19, wherein the battery cell further comprises an adapter plate disposed between the tab and the cover plate, and the tab inspection method further comprises:
using the light source to light the adapter plate;
using the photographic apparatus to acquire a second scanned image containing the adapter plate; and
determining whether the adapter plate is deformed based on the second scanned image.

21. The tab inspection method of claim 20, wherein the determining whether the adapter plate is deformed based on the second scanned image comprises:
determining the corresponding position of the adapter plate in the second scanned image; determining the position of an inspection caliper according to the corresponding position; capturing the edge line of the adapter plate using the inspection caliper and calculating the angle of the edge line of the adapter plate; and determining that the adapter plate is deformed when the angle of the edge line is greater than or equal to a preset value.

22. The tab inspection method of claim 21, wherein the tab inspection method further comprises:
sending an inspection result to a control apparatus so that the control apparatus can determine whether to perform scrapping treatment on the battery cell based on the inspection result.
